# EUROPÄISCHE PATENTSCHRIFT

(11) **EP 3 003 768 B1**
(45) Veröffentlichungstag und Bekanntmachung des Hinweises auf die Patenterteilung: **31.10.2018**
(21) Anmeldenummer: 14723076.7
(22) Anmeldetag: 09.05.2014
(51) Int. Cl.: B60K 28/04, B60K 28/06, B60W 50/14, G08B 21/06, B60W 30/12, B62D 15/02

(54) **NOTFALLASSISTENZ OHNE AKTIVIERTE QUERFÜHRUNGSUNTERSTÜTZUNG**
EMERGENCY ASSISTANCE BY DEACTIVATED STEERING ASSISTANCE
AIDE D'URGENCE AVEC DESACTIVATION DE L'ASSISTANCE AU MAINTIEN DE LA TRAJECTOIRE

(30) Priorität: 04.06.2013 DE 102013009424
(43) Veröffentlichungstag der Anmeldung: 13.04.2016
(73) Patentinhaber: Volkswagen Aktiengesellschaft, 38440 Wolfsburg (DE)
(72) Erfinder: EIGEL, Thomas, 13585 Berlin (DE)
(86) Internationale Anmeldenummer: PCT/EP2014/059573
(87) Internationale Veröffentlichungsnummer: WO 2014/195086

(56) Entgegenhaltungen:
- EP-A1- 2 314 490
- DE-A1-102004 024 692
- DE-A1-102004 047 861
- DE-A1-102007 043 604
- US-A- 5 585 785

## Beschreibung

Die Erfindung betrifft ein Verfahren zum Überführen eines ohne aktivierte Querführungsunterstützung fahrenden Fahrzeugs in einen Fahrzustand mit vermindertem Kollisionsfolgenrisiko bei einem Notfall des Fahrers, also eine Notfallassistenz, gemäß dem Oberbegriff des Anspruchs 1 sowie ein entsprechendes Notfallassistenzsystem gemäß dem Oberbegriff des Anspruchs 7.

Im Bereich der aktiven Sicherheit eines Kraftfahrzeugs sind heutige Fahrerassistenzsysteme bereits in der Lage Fahraufgaben des Fahrers eines Kraftfahrzeugs wahrzunehmen und teilautomatisierte Fahrfunktionen auszuführen. Dies manifestiert sich in den Beispielen adaptive Geschwindigkeitsregelung (Adaptive Cruise Control), Spurhalteassistent bzw. Querführungsunterstützung (Lane Assist, Heading Control).

Allerdings sind diese Fahrassistenzsysteme kaum auf einen teilweisen oder gesamten Ausfall des Fahrers des Kraftfahrzeugs ausgelegt. Ein derartiger Fahrerausfall zum Ausführen der ihm obliegenden Fahrfunktionen kann beispielsweise durch eine Übermüdung oder ein plötzlich einsetzendes gesundheitliches Problem des Fahrers bedingt sein. Übermüdung führt oftmals zu einem Sekundenschlaf und damit verbundenen kurzfristigen Verlust der Fahrzeugkontrolle. Gesundheitliche Probleme bedeuten ein körperliches Unvermögen des Fahrers zum Führen des Kraftfahrzeugs und können beispielsweise ein plötzlicher Herzinfarkt sein. Derartige Situationen führen oftmals zu gravierenden Unfällen, insbesondere wenn das Fahrzeug sich mit einer hohen Geschwindigkeit auf einer Autobahn oder einer autobahnähnlichen Straße bewegt.

Die Druckschrift DE 10 2009 022 055 A1 beschreibt einen Spurhalteassistenten, der bei einem erkannten Verlassen einer Fahrspur ein Gegenlenkmoment zum Zurückführen des Fahrzeugs in die Fahrspur erzeugt, wobei das erzeugte Gegenlenkmoment durch den Fahrer deaktiviert oder übersteuert werden kann. Um ein Verlassen der Fahrspur zu verhindern, wenn bei einem Spurwechsel eine Kollisionsgefahr droht oder eine Übermüdung des Fahrers festgestellt wurde, kann ein zur Übersteuerung des erzeugten Gegenlenkmoments notwendiger Schwellwert erhöht und eine diesbezügliche Warnung ausgegeben werden. Das System kann aber einem teilweisen oder totalen Ausfall des Fahrers nicht wirksam entgegenwirken, da es diesem Zustand mit einer automatischen Fahrt begegnen würde.

Ebenso beschreibt die Veröffentlichung DE 10 2011 116 301 A1 eine Regeleinrichtung zur Durchführung von unterstützenden Eingriffen in die Fahrzeuglängsregelung und/oder Fahrzeugquerregelung, wobei die Regeleinrichtung von einem deaktivierten Zustand in einen aktivierten Zustand übergeht, wenn ein vordefinierter Aufmerksamkeitsgrad des Fahrers erreicht oder unterschritten wird. Mit anderen Worten, die Regeleinrichtung verhindert beispielsweise bei einem übermüdeten Fahrer das Abkommen von der Fahrbahn. Allerdings würde das System auch hier in einen automatischen Fahrmodus übergehen, wenn der Fahrer teilweise oder total ausfällt.

Da sich die oben genannten unfallauslösenden Situationen auch im Rahmen gesundheitlicher Probleme, insbesondere Herz- und Kreislaufstörungen älterer Menschen, manifestieren, wurde vom BMFT (Bundesministerium für Bildung und Forschung) das Projekt SmartSenior ins Leben gerufen, welches den Zweck hat technische Maßnahmen zur Beibehaltung der Teilnahme von Senioren am gewohnten Leben zu entwickeln. Im Rahmen dieses Projekts wurde ein Nothalteassistent zum abgesicherten Anhalten eines Fahrzeugs bei plötzlicher Fahrunfähigkeit des Fahrzeugführers entwickelt.

Die Veröffentlichung P. Waldmann et. al.: "Der Nothalteassistent - abgesichertes Anhalten bei plötzlicher Fahrunfähigkeit des Fahrzeugführers", 3. Deutscher AAL-Kongress, 26.-27. Januar 2010, Berlin, Tagungsband, ISBN 978-3-8007-3209-8, VDE Verlag Berlin, beschreibt einen derartigen Nothalteassistenten. Dabei besteht für den erkannten Fall des körperlichen Unvermögens des Fahrzeugführers das primäre Ziel des Nothalteassistenten darin, einen Unfall zu vermeiden und das Fahrzeug in einen sicheren Zustand zu überführen. Sollte dies aufgrund einer komplexen Verkehrssituation nicht möglich sein, so muss zumindest die Energie des Fahrzeugs möglichst verringert werden, um die Unfallfolgen zu mindern. Zur sicheren Erkennung des körperlichen Unvermögens des Fahrers ist eine entsprechend aufwendige Sensorik mit entsprechender Auswertung notwendig.

Die Druckschrift DE 10 2004 047 861 A1 beschreibt ein Verfahren zur Unterstützung des Fahrers eines Fahrzeugs bei der Einhaltung der Fahrspur, bei dem die Fahreraktivität überwacht wird und/oder überwacht wird, ob der Fahrer von der Fahraufgabe abgelenkt ist und ein Verlassen oder bevorstehendes Verlassen der Fahrspur detektiert wird. Dabei wird bei Erkennung eines bevorstehenden oder bereits erfolgten Verlassens der Fahrspur und fehlender Fahreraktivität oder einer Fahreraktivität unterhalb einer vorgebbaren Schwelle oder bei einer Ablenkung des Fahrers von der Verkehrssituation überprüft, ob der Fahrer seine Lenkaufgabe wahrnimmt, wobei bei nicht wahrgenommener Lenkaufgabe eine Warnung und/oder ein korrigierender Lenkeingriff erfolgt.

Die Druckschrift US 5 585 785 A betrifft einen druckempfindlichen Wandler, der entlang des Umfangs eines Lenkrades angeordnet ist und den von einer Hand auf das Lenkrad ausgeübten Druck misst. Ein Steuergerät überwacht das variable Drucksignal des Wandlers und gibt eine Warnung aus, wenn der Druck auf einen Wert unterhalb eines Grenzwertes fällt und wenn das Übertragungsverhalten des Drucksignals sich erheblich verschlechtert. Ein am Lenkrad angeordnetes Display zeigt eine visuelle Indikation der Schläfrigkeit des Fahrers.

Die Druckschrift DE 10 2004 024 692 A1 bezieht sich auf ein Verfahren und eine Vorrichtung zur Unterstützung des Fahrers eines Fahrzeugs bei der Einhaltung einer Fahrspur. Hierbei wird der Fahrspurverlauf erfasst und mit dem tatsächlichen Fahrtkursverlauf des Fahrzeugs verglichen, wobei aus dem Vergleichsergebnis abgeleitet wird, ob ein Verlassen der Fahrspur bevorsteht oder bereits erfolgt ist. Bei Erkennung eines bevorstehenden oder bereits erfolgten Verlassens der Fahrspur wird selbsttätig ein Lenkraddrehmoment an einem im Fahrzeug angeordneten Lenkrad erzeugt und eine dadurch verursachte Lenkradwinkeländerung bestimmt, wobei eine Fahrerwarnung ausgelöst wird, wenn die Lenkradwinkeländerung ein vorgegebenes Kriterium erfüllt.

Die Druckschrift DE 10 2007 043 604 A1 beschreibt ein Verfahren zur Warnung des Fahrers eines Kraftfahrzeugs, bei dem im Falle einer erhöhten Unfallgefahr die Gierrate verändert wird.

Die Druckschrift EP 2 314 490 A1 beschreibt ein Verfahren zur Steuerung des Betriebs eines vollautomatischen, zur unabhängigen Fahrzeugführung ausgebildeten Fahrerassistenzsystems eines Kraftfahrzeugs, bei welchem bei Eintritt wenigstens einer Übernahmebedingung eine Fahrerübernahmeaufforderung ausgegeben wird, welche bei Fahrübernahme durch den Fahrer, insbesondere durch Betätigung des Lenkrads und/oder der Pedalerie und/oder eines Schalters, zum Deaktivieren des Fahrerassistenzsystems führt, wobei bei Eintritt einer Übernahmebedingung ein wenigstens einen zur Überführung des Kraftfahrzeugs in einen sicheren Zustand, insbesondere den Stillstand, dienenden Fahreingriff und insbesondere auch eine Fahrerübernahmeaufforderung umfassender Aktionsplan, der einen zeitlichen Ablauf von Steuerungsbefehlen für Fahrzeugsysteme enthält, ausgeführt wird.

Ziel des Nothalteassistenten bleibt die Überführung des Fahrzeugs in einen sicheren Zustand, d.h. in den Stillstand, wobei der Nothalteassistent hier ausschließlich für den Einsatz auf Autobahnen und autobahnähnlichen Landstraßen konzipiert ist. In diesem Fall ist der sichere Zustand des Fahrzeugs im Idealfall durch einen Stillstand auf dem Pannenstreifen gegeben, wobei zum Erreichen des Pannenstreifens der Nothalteassistent gegebenenfalls Spurwechsel vornehmen muss.

Der automatisierte Nothalt auf einen Pannenstreifen erfordert neben einer zuverlässigen Spurführung und Längsführung, die durch das ACC und Lane-Assist bewerkstelligt werden, die Möglichkeit eines abgesicherten Spurwechsels. Dazu muss der Nothalteassistent mit einer komplexen umfelderfassenden Sensorik ausgerüstet sein, um Objekte im 360°-Umfeld des Fahrzeugs zu erfassen und zu tracken. Ferner wird zur Positionsbestimmung eine präzise digitale Karte benötigt. Ist aber beispielsweise die Verkehrsdichte so hoch, dass sich ein Spurwechsel als zu schwierig gestaltet, so wird das Fahrzeug innerhalb der aktuellen Fahrspur bis in den Stillstand abgebremst.

Bei diesem Nothalt innerhalb der eigenen Spur auf einer Autobahn oder einer autobahnähnlichen Landstraße soll zwar der rückwärtige Verkehr berücksichtigt werden, bei den auf einer Autobahn üblichen Geschwindigkeiten kann es aufgrund der hohen Relativgeschwindigkeit zwischen dem stehenden Fahrzeug und dem nachfolgenden Verkehr zu Auffahrunfällen mit hohem Energieeintrag in das stehende Fahrzeug kommen, was zu schweren Kollisionsfolgen führen kann. Ferner ist bei dem bekannten Nothaltesystem eine aufwendige Notfallerkennungssensorik und Umfeldsensorik notwendig.

Die Druckschrift DE 10 2011 109 618 A1 beschreibt ein Verfahren und eine Vorrichtung zum Betrieb eines Fahrzeugs, wobei zumindest bei einer ermittelten Fahruntüchtigkeit des Fahrers des Fahrzeugs automatisch ein Eingriff in eine Brems- Lenkungs- und/oder Antriebsstrangfunktion aktiviert und das Fahrzeug bis zu einem Stillstand abgebremst wird. Dabei kann die Fahruntüchtigkeit des Fahrers mittels auftretender Lenk-, Beschleunigungs- und/oder Bremsbetätigungsmuster, anhand einer erfassten Müdigkeit des Fahrers, anhand einer Mehrzahl von aktivierten Fahrerassistenzeingriffen innerhalb einer vorgebbaren Zeitdauer und/oder einem erfassten Abkommen des Fahrzeugs von der Fahrbahn ermittelt werden. Auch hier soll das Fahrzeug bevorzugt auf einem Seitenstreifen zum Stillstand gebracht werden, was eine komplexe Notfallerkennungssensorik und Umfelderfassungssensorik sowie die Möglichkeit zum kontrollierten automatischen Spurwechsel bedingt.

Bei den bekannten Nothalteassistenten ist einerseits die Anforderungen an die benötigte komplexe Sensorik sehr hoch und anderseits besteht bei einem Anhaltevorgang bis zu einem Stillstand des Fahrzeugs außerhalb eines sicheren Stand- oder Pannenstreifens die Gefahr von Auffahrunfällen mit hohem Energieeintrag.

Der Erfindung liegt daher die Aufgabe zugrunde, ein Verfahren und eine Vorrichtung zu schaffen, wobei ein mit hoher Geschwindigkeit ohne aktivierter Querführung fahrendes Fahrzeug bei einem vermuteten Notfall des Fahrers ohne komplexe Sensorik in einen Fahrzustand mit vermindertem Kollisionsfolgenrisiko überführt wird.

Diese Aufgabe wird durch ein Verfahren mit den Merkmalen des Anspruchs 1 sowie durch eine Vorrichtung mit den Merkmalen des Anspruchs 7 gelöst. Bevorzugte Ausgestaltungen der Erfindung sind Gegenstand der Unteransprüche.

Das erfindungsgemäße Verfahren zum Überführen eines mit nicht aktivierter Querführungsunterstützung fahrenden Fahrzeugs in einen Fahrzustand mit vermindertem Kollisionsfolgenrisiko, wobei die Geschwindigkeit des Fahrzeugs größer als eine vorgegebene Grenzgeschwindigkeit ist, weist die folgenden Schritte auf:
- Erkennen einer Hands-Off-Situation des Fahrers in einer Hands-Off-Phase und Ausgeben einer Hands-Off-Warnung,
- Durchführen einer Warnungseskalation in einer Eskalationsphase, falls keine Reaktion auf die Hands-Off-Warnung erfolgt, und
- Reduzieren der Fahrzeuggeschwindigkeit in einer Eingriffsphase auf eine Geschwindigkeit kleiner als die vorgegebene Grenzgeschwindigkeit, falls keine Reaktion in der Eskalationsphase erfolgt, wobei
   während der Hands-Off-Phase, der Eskalationsphase und der Eingriffsphase ein rückführendes Moment auf die Lenkeinrichtung des Fahrzeugs aufgeschaltet wird, wenn ein Verlassen des Fahrzeugs von der aktuellen Fahrspur erkannt wird.

Als einziges und maßgebliches Auslösekriterium für die Durchführung der Notfallassistenz wird auf das Erkennen einer Hands-Off-Situation abgestellt, die allerdings einige Zeit, beispielsweise maximal ca. 10 Sekunden, in Anspruch nimmt. Ist während dieser Phase keine Querführungsunterstützung aktiviert, so wird das Fahrzeug mit hoher Wahrscheinlichkeit die Fahrspur während der Hands-Off-Phase bei einem Ausfall des Fahrers verlassen. Um dies zu verhindern, wird auch bei deaktivierter Querführungsunterstützung während der Hands-Off-Phase ein das Fahrzeug auf die Fahrspur zurückbringendes Moment auf die Lenkung geschaltet, wenn ein Verlassen des Fahrzeugs von der Fahrspur erkannt wird. Dadurch wird vorteilhafterweise der Hands-Off-Erkennung ausreichend Zeit zum sicheren Erkennen einer Hands-off-Situation gegeben.

Dabei erfolgt während der Eskalationsphase eine Querführung des Fahrzeugs derart, dass als Funktion der Fahrzeuggeschwindigkeit ein Abkommen des Fahrzeugs von dem aktuellen Fahrspur gerade verhindert wird, indem der Eingriffszeitpunkt der Querführung so gewählt wird, dass das Fahrzeug die Fahrspur gerade nicht verlässt und entlang einer Fahrtrajektorie der Eskalationsphase zwischen den linken und rechten Markierungen der Fahrspur hin und her pendelt. Durch das Pendeln des Fahrzeugs zwischen den beidseitigen Markierungen seiner aktuellen Fahrspur wird einerseits den Fahrer, falls er fahrfähig ist, oder der mögliche Beifahrer zu einer Reaktion provoziert und anderseits der umgebende Verkehr auf eine mögliche Komplikation hingewiesen und gewarnt.

Vorzugsweise wird in der Eingriffsphase die Warnungseskalation intensiviert, indem zumindest die Querführung des Fahrzeugs durch ein ruckartiges Querprofil weiter beeinträchtigt wird, wobei das Fahrzeug weiterhin auf der aktuellen Fahrspur gehalten wird. Auf diese Weise wird in der Eingriffsphase verstärkt versucht eine Reaktion des Fahrers oder eines eventuellen Beifahrers zu provozieren. Ferner wird durch diese unorthodoxe Fahrweise dem Fahrzeugumfeld deutlich signalisiert, dass mit dem Fahrzeug etwas nicht stimmt; es erfolgt also eine deutliche Warnung an das Fahrzeugumfeld.

Weiter bevorzugt werden in der Eingriffsphase Bremsrucke zur Warnungseskalation eingesetzt. Diese Bremsrucke sollen zu einer Reaktion seitens des Fahrers oder des Beifahrers stimulieren. Auch hier haben die Bremsrucke den zusätzlichen Effekt einer Warnung an das Fahrzeugumfeld.

Schließlich können in der Eingriffsphase die akustische und/oder optische Warnung intensiviert werden, um den Fahrer zu einer Reaktion zu veranlassen. Ferner kann in der Eingriffsphase die Warnblinkanlage aktiviert werden, um eine weitere direkte Warnung an das Fahrzeugumfeld zu erzeugen.

Weiter bevorzugt werden mit dem Erreichen der Grenz- oder Notfallgeschwindigkeit, die insbesondere 60 km/h beträgt, alle Längs- und Querführungen sowie alle Warnungen deaktiviert. Ab diesem Zeitpunkt muss daher mit einem Unfall des Fahrzeugs gerechnet werden, dessen Folgen aufgrund der für eine Autobahn oder autobahnähnlichen Straße niedrigen Notfallgeschwindigkeit nicht lebensbedrohlich sein dürften, insbesondere da bei einem Notfall des Fahrers die Geschwindigkeit weiter abnimmt und das Fahrzeug in absehbarer Zeit aufgrund mangelnder Lenkaktivität die Fahrbahn verlassen wird.

Es ist auch möglich, dass die Grenzgeschwindigkeit durch die Geschwindigkeit Null gebildet wird, d.h. das Fahrzeug in den Stillstand in der Eingriffsphase abgebremst und folglich in seiner Fahrspur stehen bleiben wird.

Die erfindungsgemäße Vorrichtung, welche zur Durchführung des im Vorangegangenen beschriebenen Verfahrens zum Überführen eines mit Querführungsunterstützung fahrenden Fahrzeugs in einen Fahrzustand mit vermindertem Kollisionsfolgenrisiko dient, umfasst
- einen Längsführungsassistenten,
- einen Querführungsassistenten,
- eine Hands-Off-Erkennungseinrichtung, und
- einen Notfallassistenten zur Durchführung von Warnungseskalationen in einer Eskalationsphase und Eingriffen in die Fahrfunktionen des Fahrzeugs in einer Eingriffsphase als Funktion der Ergebnisse der Hands-Off-Erkennungseinrichtung, wobei der Notfallassistent die Querführung des Fahrzeugs zumindest während der Hands-Off-Erkennung bei deaktivierter Querführung übernimmt, und wobei
   während der Eskalationsphase eine Querführung des Fahrzeugs derart erfolgt, dass als Funktion der Fahrzeuggeschwindigkeit ein Abkommen des Fahrzeugs von der aktuellen Fahrspur gerade verhindert wird, indem der Eingriffszeitpunkt der Querführung so gewählt wird, dass das Fahrzeug die Fahrspur gerade nicht verlässt und entlang einer Fahrtrajektorie der Eskalationsphase zwischen den linken und rechten Markierungen der Fahrspur hin und her pendelt.

Vorzugsweise führt der Notfallassistent nach einer positiven Hands-Off-Erkennung die Warnungseskalation in mindestens zwei aufeinanderfolgenden Phasen durch, nämlich insbesondere einer Eskalationsphase und einer nachfolgenden Eingriffsphase, wobei in der Eskalationsphase Warnungen an den Fahrer bzw. den Beifahrer in verstärktem Maße erzeugt werden, während in der Eingriffsphase neben einer weiteren Eskalation der Warnungen zusätzlich Eingriffe in das Fahrgeschehen vorgenommen werden. Diese Eingriffe können Bremseingriffe und Querführungseingriffe sein. Ferner sind Eingriffe in den Antriebsstrang möglich, um das Fahrzeug zu verlangsamen.

Nach erfolglosem Ablauf der Eingriffsphase und mit dem Erreichen einer Grenzgeschwindigkeit deaktiviert der Notfallassistent die Längs- und Querführung und sämtliche Warnungen.

Eine bevorzugte Ausführungsform der Erfindung wird nachfolgend anhand der Zeichnungen erläutert. Dabei zeigt
- Fig. 1: eine schematische Funktionsbeschreibung des Verfahrens, und
- Fig. 2: ein Blockdiagramm der Vorrichtung zur Durchführung des Verfahrens.

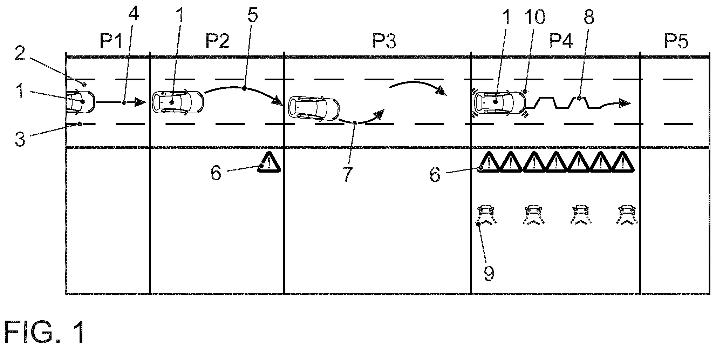

Fig. 1 beschreibt in schematischer Darstellung die Funktionsweise des Verfahrens zum Überführen eines mit nicht aktiver Querführungsunterstützung fahrenden Fahrzeugs 1 in einen Fahrzustand mit vermindertem Kollisionsfolgenrisiko bei einem Notfall des Fahrers, welches in einem Notfallassistent realisiert ist, und welches das Ziel hat die Geschwindigkeit des Fahrzeugs 1 kontrolliert auf eine Notfallgeschwindigkeit zu reduzieren.

In einer ersten Phase P1 bewegt sich ein Fahrzeug 1 auf einer Fahrspur 2 beispielsweise einer Autobahn oder einer autobahnähnlichen Straße, welche mit Markierungen 3 gegenüber benachbarten Fahrspuren abgegrenzt ist. Die Geschwindigkeit des Fahrzeugs ist in dieser Phase höher als die oben genannte Notfallgeschwindigkeit oder vorgegebene Grenzgeschwindigkeit. Beispielsweise kann die aktuelle Fahrzeuggeschwindigkeit im Falle einer Autobahn ca. 150 km/h betragen, wobei die bevorzugte Notfallgeschwindigkeit bei 60 km/h liegt. In dieser Phase P1 ist der Fahrer fahrtüchtig und das Fahrzeug 1 bewegt sich entlang einer Fahrtrajektorie 4, wobei das Fahrzeug 1 vom Fahrer mittig auf seiner Fahrspur 2 gehalten wird. Eine Längsführung, wie beispielsweise ACC, kann dabei aktiv oder inaktiv sein.

In der zweiten Phase P2, der Hands-Off-Phase, detektiert eine Hands-Off-Einrichtung, dass der Fahrer des Fahrzeugs 1 das Lenkrad nicht mehr ergriffen hat. Nach der Zeitspanne, die üblicherweise maximal 10 Sekunden betragen kann, erfolgt eine Hands-Off-Warnung durch zumindest eine akustische Warnung, die in Fig. 1 durch das Warnsignal 6 symbolisiert ist. Da bei nicht vorhandener Querführungsunterstützung während der zweiten Phase P2 die Gefahr sehr hoch ist, dass das Fahrzeug 1 mit der eingangs als Beispiel genannten hohen Geschwindigkeit bei einem fahruntüchtigen Fahrer die Fahrspur 2 verlassen wird und folglich eine hochgradige Unfallgefahr besteht, führt der Notfallassistent eine Querführungsunterstützung in dieser zweiten Phase P2 aus und das Fahrzeug wird entlang der in Fig. 1 beispielhaft dargestellten Fahrtrajektorie 5 der zweiten Phase P2 am Verlassen der Fahrspur 2 gehindert. Das Aufschalten des notwendigen rückführenden Lenkmoments kann vom Notfallassistenten oder durch eine geeignete Aktivierung der Querführungsunterstützung durch den Notfallassistenten erfolgen. Nach Ablauf der zweiten Phase P2 und dem Ausgeben der Hands-Off-Warnung kann keine Aussage getroffen werden, ob der Fahrer absichtlich oder unabsichtlich keinen Lenkradkontakt hat.

Reagiert der Fahrer des Fahrzeugs 1 nicht auf die Hands-Off-Warnhinweise 6 der zweiten Phase P2, so kann dies bedeuten, dass der Fahrer absichtlich freihändig fährt, um die automatische Fahrmöglichkeit der Querführung auszutesten. Dies ist zu unterbinden. Die durch die Hands-Off-Erkennung detektierten fehlenden Lenkeingriffe können aber auch bedeuten, dass der Fahrer des Fahrzeugs 1 nicht fahrtüchtig ist. Dies kann ursächlich durch einen medizinischen Notfall oder durch ein Einschlafen des Fahrers, beispielsweise aufgrund einer Übermüdung, hervorgerufen sein.

In der dritten Phase P3, der Eskalationsphase, soll daher unabhängig von dem Grund der fehlenden Lenkaktivität der Versuch unternommen werden, den Fahrer zu reaktivieren oder den Beifahrer zu aktivieren. Dazu wird mit dem Eintreten in die dritte Phase P3 eine erste Stufe der Warnungseskalation durchgeführt, wobei der im Hintergrund in der Eskalationsphase P3 aktivierte Notfallassistent bewirkt, dass weiterhin eine Querführungsunterstützung des Fahrzeugs 1 durchgeführt wird, allerdings erfolgt der Eingriff der Querführung zu einem späteren Zeitpunkt im Vergleich zu dem normalen Verhalten der Querführung. Dabei ist der Eingriffszeitpunkt so gewählt, dass das Fahrzeug 1 den Fahrstreifen oder Fahrspur 2 gerade nicht verlässt und sozusagen zwischen den linken und rechten Markierungen 3 der Fahrspur 2 entlang einer Fahrtrajektorie 7 der dritten Phase P3 hin und her pendelt. Für den Fahrer des Fahrzeugs 1, der beispielsweise kurzfristig eingeschlafen war oder die Grenzen der Technik ausloten möchte, wird auf diese Weise das Fahren unkomfortabel gestaltet. Weiterhin ist dies ein Hinweis darauf, dass er die Fahrverantwortung wieder übernehmen muss. Sollte der Fahrer weiter inaktiv bleiben, was eine Fahruntüchtigkeit wahrscheinlicher werden lässt, so ist dies auch ein dringender Hinweis an einen möglichen Beifahrer nun aktiv zu werden, indem dieser beispielsweise in die Lenkung eingreift oder eine sonstige Maßnahme ergreift.

Zeigt der Fahrer des Fahrzeugs 1 weiterhin keine Reaktion, so geht das Verfahren über in die vierte Phase P4, die Eingriffsphase, in der einerseits die Warnungseskalation intensiviert wird und andererseits eine Reduktion der Fahrzeuggeschwindigkeit durch einen entsprechenden Eingriff in die Steuerung des Fahrzeugs 1 bewirkt wird. Mit anderen Worten, der Notfallassistent agiert nun im Vordergrund. Die weitere Warnungseskalation kann durch eine dauerhafte akustische Warnung bewirkt werden, wie dies in Fig. 1 schematisch durch die Vielzahl der Warnsymbole 6 dargestellt ist und es wird durch ein vorzugsweise blinkendes Anzeigesymbol 9 angezeigt, dass der Notfallassistent aktiv im Vordergrund agiert. Ferner wird das Fahrzeug 1 durch kurzfristige Bremsrucke in einen unruhigen Zustand versetzt, um den Fahrkomfort weiter zu verringern. Um eine Reaktivierung des Fahrers des Fahrzeugs 1 zu unterstützen oder doch noch eine Reaktion des Beifahrers auszulösen, wird die Querführung des Fahrzeugs 1 weiter zunehmend unkomfortabel gestaltet. Dies wird durch Lenkeingriffe hervorgerufen, die ein ruckartiges Querprofil erzeugen, wie dies durch die Fahrtrajektorie 8 der vierten Phase P4 symbolisch dargestellt ist, wobei das Fahrzeug 1 weiterhin innerhalb der aktuellen Fahrspur 2 gehalten wird. Durch diese ungewöhnliche Fahrtrajektorie 8 wird zusätzlich das Fahrzeugumfeld des Fahrzeugs 1 gewarnt. Eine weitere Warnung des Umfeldes kann beispielsweise noch durch eine Aktivierung der Warnblinkanlage 10 erfolgen. Ferner können durch ein aktives oder passiv im Hintergrund agierendes ACC-System Auffahrunfälle mit einem auf der eigenen Fahrspur 2 vorausfahrenden Fahrzeug in dieser vierten Phase P4 vermieden werden.

Mit dem Erreichen der Notfallgeschwindigkeit, die vorzugsweise 60 km/h beträgt, wird die fünfte Phase P5 des Verfahrensablaufs erreicht, in der unter der Voraussetzung einer unkritischen Verkehrssituation die Längs- und Querführungen sowie alle Warnungen deaktiviert werden. Dabei bedeutet eine unkritische Verkehrssituation, dass der weitere Straßenverlauf keine kritische Krümmung aufweist und dass keine kritische Annäherung an ein vorausfahrendes Fahrzeug erkannt wird. Zwar scheint es auf den ersten Blick, dass das Fahrzeug in der fünften Phase P5 mehr oder weniger sich selbst überlassen wird, allerdings ist ein Unfall des Fahrzeugs bei der genannten Notfallgeschwindigkeit in seinen Folgen überschaubar. Ferner ist ein Auffahrunfall mit einem nachfolgenden Fahrzeug aufgrund der Relativgeschwindigkeit weniger gravierend als wenn das Fahrzeug in den Stillstand gebracht worden wäre.

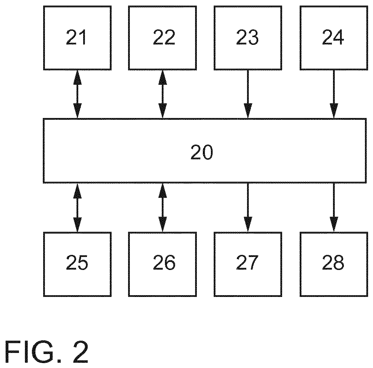

Fig. 2 zeigt in schematischer Darstellung die erfindungsgemäße Vorrichtung, deren Kernbestandteil durch einen Notfallasistenten 20 gebildet wird. Der Notfallassistent 20 steht in Verbindung mit einer Querführungseinrichtung 21 und einer Längsführungseinrichtung 22. Eine Querführungseinrichtung ist beispielsweise eine Spurhalteeinrichtung oder ein Lane-Assist. Als Längsführungseinrichtung kommt beispielsweise eine adaptive Geschwindigkeits- und Abstandsregelung, also ein ACC, oder ein Notbremsassistent in Betracht. Ferner erhält der Notfallassistent Informationen von einer Hands-Off-Erkennung 23 und einer Einrichtung 24 zur Erkennung einer Fahrer-/Beifahreraktivität.

Aufgrund des Ergebnisses der Hands-Off-Erkennung 23 erzeugt der Notfallassistent 20 geeignete Warnungen 25 akustischer, optischer und/oder haptischer Natur und führt Lenkeingriffe 26, Bremseingriffe 27 und Eingriffe in den Antriebsstrang 28 durch.

## Patentansprüche

1. Verfahren zum Überführen eines mit nicht aktivierter Querführungsunterstützung fahrenden Fahrzeugs (1) in einen Fahrzustand mit vermindertem Kollisionsfolgenrisiko bei einem Notfall des Fahrers, wobei die Geschwindigkeit des Fahrzeug größer als eine Grenzgeschwindigkeit ist, mit den folgenden Schritten:
Erkennen einer Hands-Off-Situation des Fahrers und Ausgeben einer Hands-Off-Warnung in einer Hands-Off-Phase (P2),
Durchführen einer Warnungseskalation in einer Eskalationsphase (P3), falls keine Reaktion auf die Hands-Off-Warnung erfolgt, und
Reduzieren der Fahrzeuggeschwindigkeit in einer Eingriffsphase (P4) auf eine Geschwindigkeit kleiner als die Grenzgeschwindigkeit, falls keine Reaktion in der Eskalationsphase (P3) erfolgt, wobei
während der Hands-Off-Phase (P2), der Eskalationsphase (P3) und der Eingriffsphase (P4) ein das Fahrzeug (1) in die Fahrspur (2) rückführendes Lenkmoment aufgeschaltet wird, wenn ein Verlassen des Fahrzeugs von der aktuellen Fahrspur erkannt wird,
**dadurch gekennzeichnet, dass**
während der Eskalationsphase (P3) eine Querführung des Fahrzeugs derart erfolgt, dass als Funktion der Fahrzeuggeschwindigkeit ein Abkommen des Fahrzeugs (1) von der aktuellen Fahrspur (2) gerade verhindert wird, indem der Eingriffszeitpunkt der Querführung so gewählt wird, dass das Fahrzeug (1) die Fahrspur (2) gerade nicht verlässt und entlang einer Fahrtrajektorie (7) der Eskalationsphase (P3) zwischen den linken und rechten Markierungen (3) der Fahrspur (2) hin und her pendelt.

2. Verfahren nach Anspruch 1, **dadurch gekennzeichnet, dass** in der Eingriffsphase (P4) die Warnungseskalation intensiviert und dass die das Fahrzeug (1) in der aktuellen Fahrspur (2) haltende Querführung derart ausgestaltet ist, dass diese ein ruckartiges Querprofil aufweist.

3. Verfahren nach Anspruch 2, **dadurch gekennzeichnet, dass** in der Eingriffsphase (P4) Bremsrucke zur die Warnungseskalation eingesetzt werden.

4. Verfahren nach einem der Ansprüche 2 oder 3, **dadurch gekennzeichnet, dass** in der Eingriffsphase (P4) akustische und/oder optische Warnungen (6) intensiviert werden.

5. Verfahren nach einem der Ansprüche 2 bis 4, **dadurch gekennzeichnet, dass** in der Eingriffsphase (P4) die Warnblinkanlage (10) aktiviert wird.

6. Verfahren nach einem der vorangegangenen Ansprüche, **dadurch gekennzeichnet, dass** nach erfolglosem Ablauf der Eingriffsphase und mit dem Erreichen der Grenzgeschwindigkeit, die insbesondere 60 km/h beträgt, alle Längs- und Querführungen sowie alle Warnungen deaktiviert werden.

7. Vorrichtung ausgelegt und eingerichtet zur Durchführung des Verfahrens zum Überführen eines ohne aktivierte Querführungsunterstützung fahrenden Fahrzeugs in einen Fahrzustand mit vermindertem Kollisionsfolgenrisiko bei einem Notfall des Fahrers nach einem der vorangegangenen Ansprüche, mit
einem Längsführungsassistenten (22),
einem Querführungsassistenten (21), und
einer Hands-Off-Erkennungseinrichtung (23), und
einem Notfallassistenten (20) zur Durchführung von Warnungseskalationen in einer Eskalationsphase (P3) und Eingriffen in die Fahrfunktionen des Fahrzeugs in einer Eingriffsphase (P4) als Funktion der Ergebnisse der Hands-Off-Erkennungseinrichtung (23) sowie zur Querführung des Fahrzeugs bei deaktivierter Querführungsunterstützung aufweist
**dadurch gekennzeichnet, dass**
während der Eskalationsphase (P3) eine Querführung des Fahrzeugs derart erfolgt, dass als Funktion der Fahrzeuggeschwindigkeit ein Abkommen des Fahrzeugs (1) von der aktuellen Fahrspur (2) gerade verhindert wird, indem der Eingriffszeitpunkt der Querführung so gewählt wird, dass das Fahrzeug (1) die Fahrspur (2) gerade nicht verlässt und entlang einer Fahrtrajektorie (7) der Eskalationsphase (P3) zwischen den linken und rechten Markierungen (3) der Fahrspur (2) hin und her pendelt.

8. Vorrichtung nach Anspruch 7, **dadurch gekennzeichnet, dass** der Notfallassistent (20) nach einer positiven Hands-Off-Erkennung die Warnungseskalation in mindestens zwei aufeinanderfolgenden Fahrphasen, insbesondere eine Eskalationsphase (P3) und einer nachfolgenden Eingriffsphase (P4), durchführt.

9. Vorrichtung nach einem der Ansprüche 7 oder 8, **dadurch gekennzeichnet, dass** der Notfallassistent (20) nach erfolglosem Ablauf der Eingriffsphase (P4) und mit dem Erreichen einer Grenzgeschwindigkeit den Längsführungsassistenten (22) und den Querführungsassistenten (21) sowie sämtliche Warnungen deaktiviert.

## Claims

1. Method for transferring a vehicle (1) driving with non-activated lateral guidance assistance into a driving state with a reduced risk of consequences of collision in the event of the driver experiencing an emergency, wherein the speed of the vehicle is higher than a speed limit, comprising the following steps:
Detecting a hands-off situation of the driver and outputting a hands-off warning in a hands-off phase (P2),
Carrying out a warning escalation in an escalation phase (P3) if there is no reaction to the hands-off warning, and
Reducing the speed of the vehicle in an intervention phase (P4) to a speed which is lower than the speed limit if there is no reaction in the escalation phase (P3), wherein
during the hands-off phase (P2), the escalation phase (P3) and the intervention phase (P4), a steering torque which returns the vehicle (1) to the lane (2) is applied if exiting of the vehicle from the current lane is detected, **characterized in that**
during the escalation phase (P3), lateral guidance of the vehicle takes place in such a way that the vehicle (1) is just prevented from leaving the current lane (2) as a function of the speed of the vehicle, by selecting the intervention time of the lateral guidance such that the vehicle (1) just fails to leave the lane (2) and oscillates to and fro along a driving trajectory (7) of the escalation phase (P3) between the left-hand and right-hand marks (3) of the lane (2).

2. Method according to Claim 1, **characterized in that** in the intervention phase (P4), the warning escalation is intensified, and **in that** the lateral guidance which keeps the vehicle (1) in the current lane (2) is configured in such a way that said lateral guidance has a jerky lateral profile.

3. Method according to Claim 2, **characterized in that** braking jolts are used for escalating the warning in the intervention phase (P4).

4. Method according to one of Claims 2 or 3, **characterized in that** audible and/or visual warnings (6) are intensified in the intervention phase (P4).

5. Method according to one of Claims 2 to 4, **characterized in that** the flashing warning indicator system (10) is activated in the intervention phase (P4).

6. Method according to one of the preceding claims, **characterized in that** after the intervention phase has run without success and when the speed limit, which is in particular 60 km/h, is reached, all the longitudinal and lateral guidance as well as all the warnings are deactivated.

7. Device configured and set up to carry out the method for transferring a vehicle driving without activated lateral guidance assistance into a driving state with a reduced risk of consequences of collision in the event of the driver experiencing an emergency, according to one of the preceding claims, having
a longitudinal guidance assistant (22),
a lateral guidance assistant (21), and
a hands-off detection device (23), and
an emergency assistant (20) for carrying out warning escalations in an escalation phase (P3) and interventions into the driving functions of the vehicle in an intervention phase (P4) as a function of the results of the hands-off detection device (23) and for performing lateral guidance of the vehicle when the lateral guidance assistance is deactivated, **characterized in that**
during the escalation phase (P3), lateral guidance of the vehicle takes place in such a way that the vehicle (1) is just prevented from leaving the current lane (2) as a function of the speed of the vehicle, by selecting the intervention time of the lateral guidance such that the vehicle (1) just fails to leave the lane (2) and oscillates to and fro along a driving trajectory (7) of the escalation phase (P3) between the left-hand and right-hand marks (3) of the lane (2).

8. Device according to Claim 7, **characterized in that** after a positive hands-off detection the emergency assistant (20) carries out the warning escalation in at least two successive driving phases, in particular an escalation phase (P3) and a subsequent intervention phase (P4) .

9. Device according to one of Claims 7 or 8, **characterized in that** after the intervention phase (P4) has run without success and when a speed limit is reached, the emergency assistant (20) deactivates the longitudinal guidance assistant (22) and the lateral guidance assistant (21) as well as all the warnings.

## Revendications

1. Procédé de transfert d'un véhicule, en mouvement avec assistance au guidage transversal non activée (1), dans un état de conduite présentant un risque de collision réduit en cas d'urgence du conducteur, la vitesse du véhicule étant supérieure à une vitesse limite, le procédé comprenant les étapes suivantes :
détecter une situation de non-intervention du conducteur et délivrer un avertissement lors d'une phase de non-intervention (P2),
effectuer une escalade d'avertissement dans une phase d'escalade (P3) s'il n'y a pas de réponse à l'alerte de non-intervention et
réduire la vitesse du véhicule dans une phase d'intervention (P4) à une vitesse inférieure à la vitesse limite si aucune réaction n'a lieu pendant la phase d'escalade (P3),
pendant la phase de non-intervention (P2), la phase d'escalade (P3) et la phase d'intervention (P4), un couple de direction ramenant le véhicule (1) sur la voie de roulement (2) étant activé en cas de détection que le véhicule quitte la voie de roulement actuelle
**caractérisé en ce que**
un guidage transversal du véhicule est effectué pendant la phase d'escalade (P3) de telle sorte que, en fonction de la vitesse du véhicule, le véhicule (1) est précisément empêché de s'écarter de la voie de roulement actuelle (2), **en ce que** l'instant d'intervention du guidage transversal est choisi de telle sorte que le véhicule (1) ne quitte pas la voie de roulement (2) et se déplace alternativement entre les marques gauche et droite (3) de la voie de roulement (2) le long d'une trajectoire de roulement (7) de la phase d'escalade (P3).

2. Procédé selon la revendication 1, **caractérisé en ce que** l'escalade d'alarme s'intensifie dans la phase d'intervention (P4) et **en ce que** le guidage transversal, maintenant le véhicule (1) dans la voie de roulement actuelle (2), est conçu de manière à présenter un profil transversal saccadé.

3. Procédé selon la revendication 2, **caractérisé en ce que**, lors de la phase d'intervention (P4), un freinage saccadé est utilisé pour l'escalade d'avertissement.

4. Procédé selon l'une quelconque des revendications 2 ou 3, **caractérisé en ce que** des avertissements acoustiques et/ou optiques (6) sont intensifiés dans la phase d'intervention (P4).

5. Procédé selon l'une des revendications 2 à 4, **caractérisé en ce que** le système d'avertissement clignotant (10) est activé dans la phase d'intervention (P4) .

6. Procédé selon l'une des revendications précédentes, **caractérisé en ce que** tous les guidages longitudinaux et transversaux ainsi que tous les avertissements sont désactivés après échec de la phase d'intervention et une fois la vitesse limite atteinte, qui est notamment de 60 km/h.

7. Dispositif conçu et adapté pour mettre en oeuvre le procédé de transfert d'un véhicule en mouvement sans assistance au guidage transversal activé dans un état de conduite présentant un risque de collision réduit en cas d'urgence du conducteur selon l'une des revendications précédentes, le dispositif comprenant
un assistant de guidage longitudinal (22),
un assistant de guidage transversal (21), et
un dispositif de détection de non-intervention (23), et
un assistant d'urgence (20) destiné à effectuer l'escalade d'avertissement dans une phase d'escalade (P3), et des interventions dans les fonctions de roulement du véhicule dans une phase d'intervention (P4) en fonction des résultats du dispositif de détection de non-intervention (23) et destiné à effectuer le guidage transversal du véhicule avec assistance au guidage transversal désactivée,
**caractérisé en ce que**
un guidage transversal du véhicule est effectué pendant la phase d'escalade (P3) de telle sorte que, en fonction de la vitesse du véhicule, le véhicule (1) est empêché de s'écarter de la voie de roulement actuelle (2), **en ce que** l'instant d'intervention du guidage transversal est choisi de telle sorte que le véhicule (1) ne quitte pas la voie de roulement (2) et se déplace alternativement entre les marques gauche et droite (3) de la voie de roulement (2) le long d'une trajectoire de roulement (7) de la phase d'escalade (P3) .

8. Dispositif selon la revendication 7, **caractérisé en ce que**, après détection positive de non-intervention, l'assistant d'urgence (20) effectue l'escalade d'avertissement dans au moins deux phases de roulement successives, notamment dans une phase d'escalade (P3) et une phase d'intervention ultérieure (P4) .

9. Dispositif selon l'une des revendications 7 ou 8, **caractérisé en ce que**, après échec de la phase d'intervention (P4) et une fois une vitesse limite atteinte, l'assistant d'urgence (20) désactive les assistants de guidage longitudinal (22) et les assistants de guidage transversal (21) et tous les avertissements.
